# EUROPÄISCHE PATENTANMELDUNG

(11) **EP 2 354 741 A2**
(43) Veröffentlichungstag der Anmeldung: **10.08.2011**
(21) Anmeldenummer: 10450196.0
(22) Anmeldetag: 27.12.2010
(51) Int. Cl.: F28D 1/06, F28F 3/12

(54) **Behälter für fluide Betriebsmittel eines Kraftfahrzeugs**

(30) Priorität: 29.01.2010 AT 1172010
(71) Anmelder: Alutech Gesellschaft m.b.H., 5651 Lend (AT)
(72) Erfinder: Lind, Christoph, 8200 Gleisdorf (AT)
(74) Vertreter: Weiser, Andreas

(57) **Zusammenfassung**

Behälter (1) für fluide Betriebsmittel eines Kraftfahrzeuges mit einem Mantel (2) und Stirnseiten, wobei der Mantel (2) die Form eines allgemeinen Kegelstumpfs hat und der Behälter (1) in Axialrichtung in einen zu seinem Mantel (2) komplementär kegelstumpfförmig ausgebildeten Wärmetauscher (10) formschlüssig eingesetzt ist.

## Beschreibung

Die vorliegende Erfindung betrifft Die vorliegende Erfindung betrifft einen Behälter für fluide Betriebsmittel eines Kraftfahrzeuges mit einem Mantel und Stirnseiten.

Moderne Kraftfahrzeuge mit hybriden oder alternativen Antrieben benötigen in zunehmendem Maße Speicherbehälter für Betriebsmittel, die beheizt oder gekühlt werden müssen, beispielsweise Tierfette, Rapsöle oder hydritisch gespeicherte Betriebsmittel. Stand der Technik ist es, derartige Behälter mit gesonderten Wärmetauschern auszustatten, die in oder um den Behälter in wärmeleitender Beziehung zu diesem bzw. dessen Inhalt angebracht werden. Die Erfindung setzt sich zum Ziel, den Aufbau und die Fertigung eines solchen Behälters zu vereinfachen.

Dieses Ziel wird mit einem Behälter der eingangs genannten Art erreicht, der sich gemäß der Erfindung dadurch auszeichnet, daß der Mantel die Form eines allgemeinen Kegelstumpfs hat und der Behälter in Axialrichtung in einen zu seinem Mantel komplementär kegelstumpfförmig ausgebildeten Wärmetauscher formschlüssig eingesetzt ist.

Auf diese Weise wird eine konische Passung zwischen Behältermantel und Wärmetauscher errichtet, welche unter Toleranzausgleich eine gleichmäßige Umfangsanlage des Behälters am der Wärmetauscher erreicht, was für eine ausgezeichnete Wärmeübertragung sorgt. Gleichzeitig wird die Montage bedeutend erleichtert, weil der Behälter einfach in die Aufnahme des Wärmetauschers eingesetzt zu werden braucht.

Gemäß einer bevorzugten Ausführungsform der Erfindung ist der Behälter mittels einer Spannvorrichtung in Axialrichtung in den Wärmetauscher eingepreßt. Dadurch kann in einem einzigen Schritt eine gute Flächenpressung am Behältermantel erreicht werden.

Bevorzugt umfaßt die genannte Spannvorrichtung Spannbänder, welche einerseits an der Außenseite des Wärmetauschers und anderseits an der Stirnseite des Behälters angreifen, was eine kostengünstige und einfach zu montierende Lösung darstellt. Insbesondere kann zu diesem Zweck vorgesehen werden, daß die eine Stirnseite des Behälters durch eine Stirnkappe gebildet ist, welche endseitig in den Mantel eingesetzt ist, wobei die Spannbänder am Rand des Mantels außerhalb der Stirnkappe verhakt sind.

In vorteilhafter Weise kann vorgesehen werden, daß der Behälter mit einer der Spannvorrichtung entgegenwirkenden Federvorrichtung gegenüber dem Wärmetauscher federnd beaufschlagt ist, insbesondere einer Feder, welche sich an einem Innenabsatz des Wärmetauschers abstützt. Dadurch kann erreicht werden, daß der Behälter nach dem Öffnen der Spannvorrichtung automatisch aus dem Wärmetauscher ausgeworfen wird, was Reparatur und Wartung erleichtert.

Eine weitere bevorzugte Ausführungsform der Erfindung zeichnet sich dadurch aus, daß der Wärmetauscher die Form einer allgemein-kegelstumpfförmigen Hülse hat. Dadurch wird ein minimaler Platzbedarf erzielt.

Bevorzugt weist die Hülse eine Innen- und eine Außenwand auf, die zwischeneinander zumindest einen Strömungskanal für ein Wärmeübertragungsfluid bilden, wodurch eine gute Wärmezu-und -abfuhr erreicht werden kann.

Besonders günstig ist es, wenn dabei die Innen- und die Außenwand über Fügelinien miteinander verbunden sind, welche zwischeneinander den genannten Strömungskanal begrenzen. Dies ermöglicht eine rasche Fertigung des bzw. der Strömungskanäle. Eine besonders gute Wärmeübertragung ergibt sich, wenn der Strömungskanal mäander- oder schlangenlinienförmig über die gesamte Hülse verläuft.

In jedem Fall ist es besonders günstig, wenn gemäß einem weiteren Merkmal der Erfindung der Wärmetauscher auf seiner Au-βenseite mit Nutschienen zur Montage am Fahrzeug und/oder Verbindung mit benachbarten Behältern ausgestattet ist.

Der Behälter der Erfindung kann aus beliebigem Material gefertigt werden. Besonders vorteilhaft ist es, wenn zumindest sein Mantel und die Innenseite des Wärmetauschers aus Aluminium gefertigt sind, was ausgezeichnete Wärmeübertragungseigenschaften bei hoher Stabilität, Korrosionsfestigkeit und geringem Gewicht ergibt.

Die Erfindung wird nachstehend anhand eines in den beigeschlossenen Zeichnungen dargestellten Ausführungsbeispiels näher erläutert. In den Zeichnungen zeigt
Fig. 1 den Behälter der Erfindung in einer Perspektivansicht;
Fig. 2 den Behälter von Fig. 1 in einer Schnittansicht entlang der Schnittlinie II-II von Fig. 3; und
Fig. 3 den Behälter von Fig. 1 im Längsschnitt.

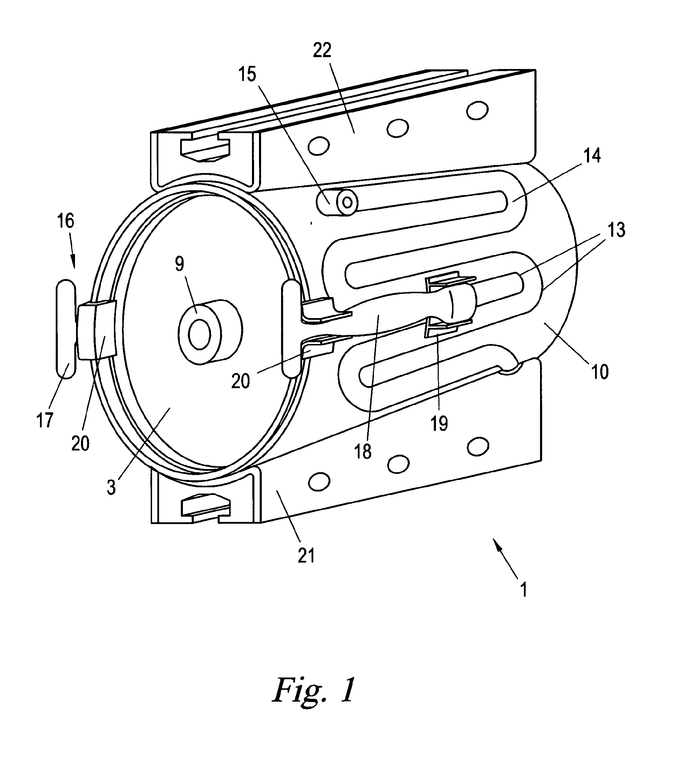

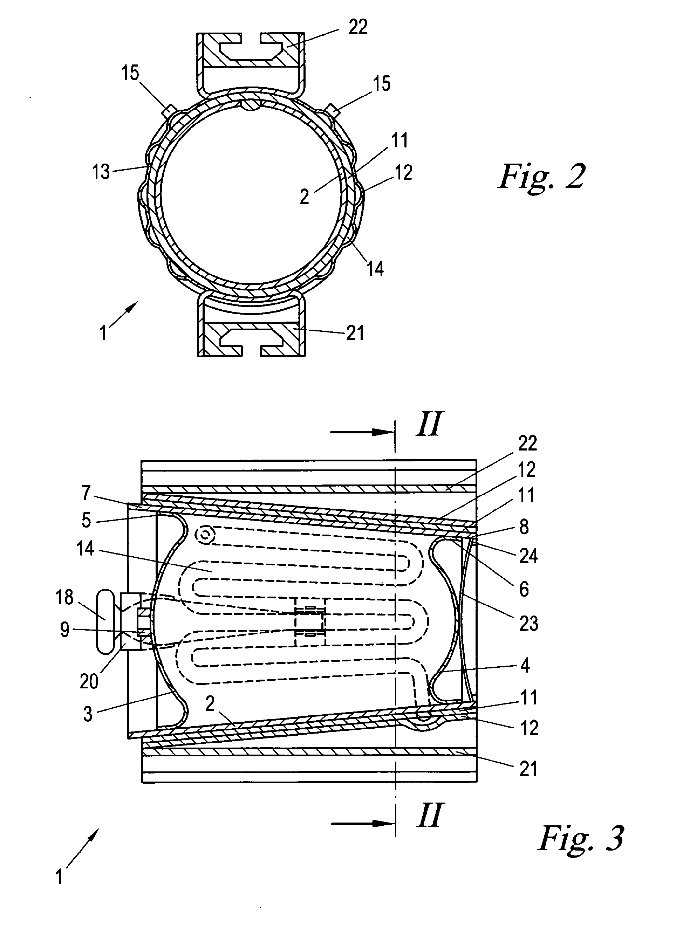

In den Fig. 1 bis 3 ist ein Behälter 1 für fluide Betriebsmittel eines Kraftfahrzeuges gezeigt, die beheizt oder gekühlt werden müssen, wie Tierfette, Rapsöle, hydritisch gespeicherte Betriebsmittel, Katalysatorflüssigkeiten oder -gase usw. Allgemein werden in der vorliegenden Beschreibung unter dem Begriff "fluide Betriebsmittel" Stoffe in jedem beliebigen fließfähigen Zustand verstanden, seien sie granular, flüssig oder gasförmig, oder Stoffe, die durch Wärmezu- oder -abfuhr in einen solchen Zustand versetzbar sind.

Der Behälter 1 setzt sich aus einem Mantel 2 und Stirnkappen 3, 4 an den Stirnseiten zusammen. Der Mantel 2 hat die Form eines allgemeinen Kegelstumpfes, d.h. eines Kegelstumpfes mit beliebiger Querschnittsform, z.B. oval, polygonal, abgerundetpolygonal, z.B. abgerundet-rechteckig usw. Bevorzugt und wie in den Figuren dargestellt hat der Mantel 2 kreisförmigen Querschnitt, d.h. die Form eines Kreiskegelstumpfs.

Die Stirnkappen 3, 4 sind bombiert, mit einem umgebogenen Rand 5, 6 versehen und von außen in die Enden des Mantels 2 dicht eingesetzt, beispielsweise indem ihre Ränder 5, 6 mit den Rändern 7, 8 des Mantels 2 verschweißt sind.

Alternativ könnten die Stirnseiten des Behälters 1 auch einstückig mit dem Mantel 2 sein, beispielsweise durch verschließendes Umformen des Mantels 2 an seinen Stirnseiten.

Der Behälter 1 ist in herkömmlicher Art und Weise mit einem oder mehreren Anschlüssen 9 zum Einfüllen und/oder Entnehmen des darin enthaltenen Betriebsmittels versehen.

Der Behälter 1, genauer sein Mantel 2, ist in Axialrichtung in einem Wärmetauscher 10 formschlüssig eingesetzt, dessen Inneres zu diesem Zweck eine zum Mantel 2 komplementärkegelstumpfförmige Aufnahme bildet.

Der Wärmetauscher 10 ist bevorzugt als doppelwandige Hülse ausgeführt und setzt sich aus einer Innenwand 11 und einer Außenwand 12 zusammen, welche entlang von Fügelinien 13 dicht miteinander verbunden sind. Die Fügelinien 13 sind so gestaltet, daß sie zwischeneinander zumindest einen Strömungskanal 14 für ein Wärmeübertragungsfluid bilden. Das Wärmeübertragungsfluid ist beispielsweise Kühlluft, Kühlwasser oder eine Heizkreisflüssigkeit.

Der Strömungskanal 14 verläuft im gezeigten Beispiel mäander- bzw. schlangenlinienförmig über den gesamten Wärmetauscher 10. Optional kann der Strömungskanal 14 auch nur über einen Teil des Wärmetauschers 10 verlaufen, z.B. geradlinig oder gekrümmt, oder es können mehrere Strömungskanäle 14 vorhanden sein.

Die Innen- und Außenwände 11, 12 werden bevorzugt ausgehend von flächigen Halbzeugen gefertigt, insbesondere Metallblechen, besonders bevorzugt Aluminiumblechen. Bei der Fertigung können die Halbzeuge in noch flachem Zustand über die Fügelinien 13 verbunden werden. Alternativ können die Halbzeuge zunächst zu den Innen- und Außenwänden 11, 12 umgeformt und erst anschließend miteinander über die Fügelinien 13 verbunden werden.

Die Fügelinien 13 können auf beliebige Art hergestellt werden, solange sie eine dichte Verbindung ergeben. Bevorzugte Varianten sind Kleben, Preßfügen, Toxen, Clinchen, Schweißen, insbesondere Reibrührschweißen (friction stir welding, FSW), und besonders bevorzugt Laserschweißen.

Die Strömungskanäle 14 sind an ihren Enden mit geeigneten Anschlüssen 15 versehen, um das Wärmeübertragungsfluid zu- und abzuführen.

Der Behälter 1 ist mittels einer Spannvorrichtung 16 in Axialrichtung in den Wärmetauscher 10 eingepreßt, sodaß die Außenseite des Mantels 2 formschlüssig an der Innenwand 11 anliegt. Die Spannvorrichtung 16 kann von jeder in der Technik bekannten Art sein, beispielsweise ein umlaufender Spannriemen, Spannhebel oder Nocken, die zwischen dem Behälter 1 und dem Wärmetauscher 10 wirken, eine Blattfeder, die auf die Stirnseite des Behälters drückt, od.dgl. Im gezeigten Beispiel umfaßt die Spannvorrichtung zwei Spannbänder 17, 18 aus elastischem Kunststoffmaterial, welche einerseits an der Außenseite des Wärmetauschers 10 und anderseits an der Stirnseite des Behälters 1 angreifen. Die Spannbänder 17, 18 sind in auf die Außenwand 12 aufgeschweißten Verankerungen 19 verankert und greifen an ihrem anderen Ende mit Haken 20 am Rand 7 des Mantels 2 an.

Der Wärmetauscher 10 ist auf seiner Außenseite mit Nutschienen 21, 22 ausgestattet, in denen Gleitsteine, Federn od.dgl. zur Verankerung an einem Fahrzeug und/oder zur Verbindung mit Nutschienen 21, 22 eines benachbarten Behälters verankert werden können.

Es ist auch möglich, eine Feder 23 im Bereich der hinteren Stirnkappe 4 an dieser oder dem Mantel 2 anzubringen, welche sich an einem Absatz 24 des Wärmetauschers 10 abstützt und bewirkt, daß der Behälter 1 beim Öffnen der Spannvorrichtung 16 automatisch nach vorne ausgeworfen wird.

Die Erfindung ist nicht auf die dargestellten Ausführungsformen beschränkt, sondern umfaßt alle Varianten und Modifikationen, die in den Rahmen der angeschlossenen Ansprüche fallen.

## Patentansprüche

1. Behälter (1) für fluide Betriebsmittel eines Kraftfahrzeuges mit einem Mantel (2) und Stirnseiten, **dadurch gekennzeichnet, daß** der Mantel (2) die Form eines allgemeinen Kegelstumpfs hat und der Behälter (1) in Axialrichtung in einen zu seinem Mantel (2) komplementär kegelstumpfförmig ausgebildeten Wärmetauscher (10) formschlüssig eingesetzt ist.

2. Behälter nach Anspruch 1, **dadurch gekennzeichnet, daß** er mittels einer Spannvorrichtung (16) in Axialrichtung in den Wärmetauscher (10) eingepreßt ist.

3. Behälter nach Anspruch 2, **dadurch gekennzeichnet, daß** die Spannvorrichtung (16) Spannbänder (17, 18) umfaßt, welche einerseits an der Außenseite des Wärmetauschers (10) und anderseits an der Stirnseite des Behälters (1) angreifen.

4. Behälter nach Anspruch 3, **dadurch gekennzeichnet, daß** eine Stirnseite des Behälters (1) durch eine Stirnkappe (3) gebildet ist, welche endseitig in den Mantel (2) eingesetzt ist, wobei die Spannbänder am Rand (7) des Mantels (2) außerhalb der Stirnkappe (3) verhakt sind.

5. Behälter nach einem der Ansprüche 2 bis 4, **dadurch gekennzeichnet, daß** er mit einer der Spannvorrichtung (16) entgegenwirkenden Federvorrichtung (23) gegenüber dem Wärmetauscher (10) federnd beaufschlagt ist.

6. Behälter nach Anspruch 5, **dadurch gekennzeichnet, daß** die Federvorrichtung eine Feder (23) ist, welche sich an einem Innenabsatz (24) des Wärmetauschers (10) abstützt.

7. Behälter nach einem der Ansprüche 1 bis 6, **dadurch gekennzeichnet, daß** der Wärmetauscher (10) die Form einer allgemein-kegelstumpfförmigen Hülse hat.

8. Behälter nach Anspruch 7, **dadurch gekennzeichnet, daß** die Hülse (10) eine Innen- und eine Außenwand (11, 12) aufweist, die zwischeneinander zumindest einen Strömungskanal (14) für ein Wärmeübertragungsfluid bilden.

9. Behälter nach Anspruch 8, **dadurch gekennzeichnet, daß** die Innen- und die Außenwand (11, 12) über Fügelinien (13) miteinander verbunden sind, welche zwischeneinander den genannten Strömungskanal (14) begrenzen.

10. Behälter nach einem der Ansprüche 7 bis 9, **dadurch gekennzeichnet, daß** der Strömungskanal (14) mäander- oder schlangenlinienförmig über die gesamte Hülse (10) verläuft.

11. Behälter nach einem der Ansprüche 1 bis 10, **dadurch gekennzeichnet, daß** der Wärmetauscher (10) auf seiner Außenseite mit Nutschienen (21, 22) zur Montage am Fahrzeug und/oder Verbindung mit benachbarten Behältern (1) ausgestattet ist.

12. Behälter nach einem der Ansprüche 1 bis 11, **dadurch gekennzeichnet, daß** zumindest sein Mantel (2) und die Innenwand (11) des Wärmetauschers (10) aus Aluminium gefertigt sind.
